# EUROPEAN PATENT APPLICATION

(11) **EP 1 640 845 A2**
(43) Date of publication of application: **29.03.2006**
(21) Application number: 05019108.9
(22) Date of filing: 02.09.2005
(51) Int. Cl.: G06F 1/00

(54) **User identification method, user identification device and corresponding electronic system**

(30) Priority: 10.09.2004 JP 2004263468; 29.07.2005 JP 2005220312
(71) Applicant: SONY CORPORATION, Tokyo (JP)
(72) Inventor: Takai, Motoyuki Sony Corp., Shinagawa-ku Tokyo (JP); Sako, Yoichiro Sony Corp., Shinagawa-ku Tokyo (JP); Terauchi, Toshiro Sony Corp., Shinagawa-ku Tokyo (JP)
(74) Representative: Melzer, Wolfgang

(57) **Abstract**

A method of identifying a user, includes steps of registering, in a memory, clapping patterns of clapping of a plurality of users with a user identification for identifying each user associated with a respective clapping pattern, picking up the sound of claps to acquire an input audio signal responsive to the clapping sound, processing the acquired input audio signal to detect a clapping pattern, and comparing the detected clapping pattern with the registered clapping pattern to determine whether any of the clapping patterns registered in the memory matches the detected clapping pattern and in the event of the presence of one of the registered clapping patterns matching the detected hand pattern, identifying the user by the user identification, registered in the memory, associated with the matching clapping pattern.

## Description

### CROSS REFERENCES TO RELATED APPLICATIONS

The present invention contains subject matter related to Japanese Patent Application JP 2004-263468 filed in the Japanese Patent Office on September 10, 2004, and Japanese Patent Application JP 2005-220312 filed in the Japanese Patent Office on July, 29, 2005, the entire contents of which are incorporated herein by reference.

### BACKGROUND OF THE INVENTION

### 1. Field of the Invention

The present invention relates to a method and a device for identifying a user when a plurality of users use the device, and an electronic apparatus and an electronic system incorporating the device.

### 2. Description of the Related Art

A plurality of users, such as a plurality of family members, often share a single electronic apparatus, and the setting and processes of the apparatus are switched on a per user basis. The electronic apparatuses used in such a manner are increasing in number.

For example, a user enters a keyword on a digital versatile disk (DVD) player to automatically record a program corresponding to the keyword. A plurality of users can set their own keywords.

For such an apparatus to identify each user, the user enters the user's own name and password on a menu screen displayed on one of a remote controller and the main unit of the apparatus.

Japanese Unexamined Patent Application Publication No. 61-172239 discloses a method of an apparatus that identifies a user using a voice recognition technique. The apparatus identifies the user by the user's own voice when the user operates the apparatus.

Japanese Unexamined Patent Application Publication No. 2003-228460 discloses a stylus of a mobile information terminal. The stylus includes a piezoelectric sounder. For example, the stylus is missing. A user claps the user's hands in a particular rhythm and a microphone in the stylus picks up the sound of hand claps of the user. The piezoelectric sounder activates the sound thereof.

### SUMMARY OF THE INVENTION

For an apparatus to identify a user, the user enters the user's own name and password on a menu screen of one of a remote controller of an apparatus and the main unit of the apparatus. Such an operation is inconvenient to the user.

In a method of entering the user's own name and password to an apparatus by means of the user's own voice, the user vocalizes sound to the apparatus. Such an operation is not likely to be well accepted by most of the users. The human voice is easily buried in the environmental sound, and it is difficult to correctly determine the human voice.

High level of individual authentication such as security check may be required if the apparatus is used by a large number of users. But if the same apparatus is shared by a limited number of users, such as family members, such a high level of individual authentication is not required.

It is thus desirable to provide an apparatus that identifies the user easily and accurately by a simple operation.

In accordance with one embodiment of the present invention, a method of identifying a user, includes steps of registering, in a memory, clapping patterns of clapping of a plurality of users with a user identification for identifying each user associated with a respective clapping pattern, picking up the sound of claps to acquire an input audio signal responsive to the clapping sound, processing the acquired input audio signal to detect a clapping pattern, and comparing the detected clapping pattern with the registered clapping pattern to determine whether any of the clapping patterns registered in the memory matches the detected clapping pattern and in the event of the presence of one of the registered clapping patterns matching the detected hand pattern, identifying the user by the user identification, registered in the memory, associated with the matching clapping pattern.

In accordance with the user identification method, in a pattern unique to the user, the user can allow the apparatus to identify himself in a simple operation, for example, clapping his hands, striking a bell located close to the apparatus, or patting the edge of the casing of the apparatus.

Unlike human voice, such a sound is not easily buried in the environment sound. The apparatus thus easily recognizes the sound pattern and identifies the user.

In accordance with embodiments of the present invention, a.simple operation of the user allows the apparatus to easily identify the user.

### BRIEF DESCRIPTION OF THE DRAWINGS

Fig. 1 illustrates a user identification device and an electronic apparatus in accordance with one embodiment of the present invention;
Fig. 2 illustrates the waveform of a registered hand-clapping pattern;
Fig. 3 illustrates the waveform of a registered hand-clapping pattern;
Figs. 4A and 4B illustrate the hand-clapping pattern;
Fig. 5 illustrates the hand-clapping pattern of each user;
Fig. 6 illustrates a hand-clapping pattern registration process;
Fig. 7 illustrates the detection of a hand-clapping pattern during user identification;
Fig. 8 illustrates a user identification process;
Figs. 9A-9C illustrate the switching of setting of the device in response to the user identification;
Fig. 10 illustrates a first system using a remote controller;
Fig. 11 illustrates a second system using a remote controller;
Fig. 12 illustrates a third system using a remote controller;
Fig. 13 illustrates the remote controller of Fig. 10;
Fig. 14 illustrates a content recording and playback apparatus of Fig. 10;
Fig. 15 illustrates a user identification process performed by the remote controller of Fig. 13;
Fig. 16 illustrates a system that identifies a user using an application program of a personal computer; and
Figs. 17A and 17B illustrate a waveform of a single hand clap sound.

### DESCRIPTION OF THE PREFERRED EMBODIMENTS

### First Embodiment

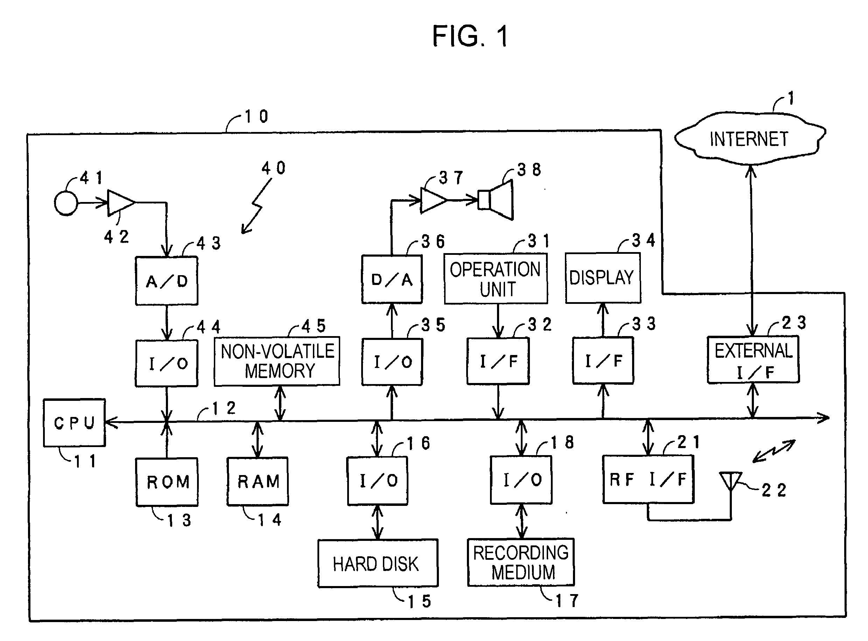

Fig. 1 illustrates a user identification device, and a content recording and playback apparatus 10, as an electronic apparatus, including the user identification device.

The content recording and playback apparatus 10 includes a central processing unit (CPU) 11. A bus 12 of the CPU 11 connects to a read-only memory (ROM) 13 storing a variety of programs and data, and a random-access memory (RAM) 14 on which the program and data are expanded.

A hard disk 15 is connected to the bus 12 via an input and output port 16. A recording medium 17, such as a compact disk (CD) or a digital versatile disk (DVD), is connected to the bus 12 via an input and output port 18. A transceiver antenna 22 is connected to the bus 12 via a (radio frequency) RF interface 21 such as an RF transceiver circuit. The bus 12 connects to an external interface 23 for connection with the Internet 1.

The hard disk 15 and the recording medium 17 store contents such as video and music for playback. The RF interface 21 and the transceiver antenna 22 receive a content from the outside in a wireless fashion, and transmits a content to the outside. The external interface 23 receives a content from the outside via the Internet 1 and transmits a content to the outside via the Internet 1.

An operation unit 31, composed of a variety of keys, is connected to the bus 12 via an interface 32. A display 34, such as a liquid-crystal display (LCD), is connected to the bus 12 via an interface 33. A loudspeaker 38 is connected to the bus 12 via an input and output port 35, a digital-to-analog (D/A) converter 36, and an audio amplifier circuit 37.

The display 34 displays, on the screen thereof, video and images as contents, and a setting screen different from user to user to be discussed later. The loudspeaker 38 outputs music and sound as a content and an audio announcement.

A microphone 41 is connected to the bus 12 via an audio amplifier 42, an analog-to-digital (A/D) converter 43, and an input and output port 44. A non-volatile memory 45 is connected to the bus 12.

A hand-clap sound generated by a user is picked up by the microphone 41, converted by the A/D converter 43 from an analog signal to a digital signal, and captured by the bus 12. As previously discussed, the non-volatile memory 45 registers beforehand a hand-clapping pattern of the hand claps of each user.

A user identification device 40 includes a hand-clapping sound input block (hand-clapping sound acquisition block), an arithmetic processing block (arithmetic controller), and the non-volatile memory 45. The hand-clapping sound input block includes the microphone 41, the audio amplifier 42, the A/D converter 43, and the input and output port 44. The arithmetic processing block includes the CPU 11, the ROM 13, and the RAM 14. The hand-clapping pattern can be registered in a portion of the hard disk 15 instead of the non-volatile memory 45.

The content recording and playback apparatus 10 is used by a plurality of users. Each user records and plays back the user's own preferred program.

Each user claps the user's hands to register beforehand the hand-clapping pattern unique to the user onto the non-volatile memory 45.

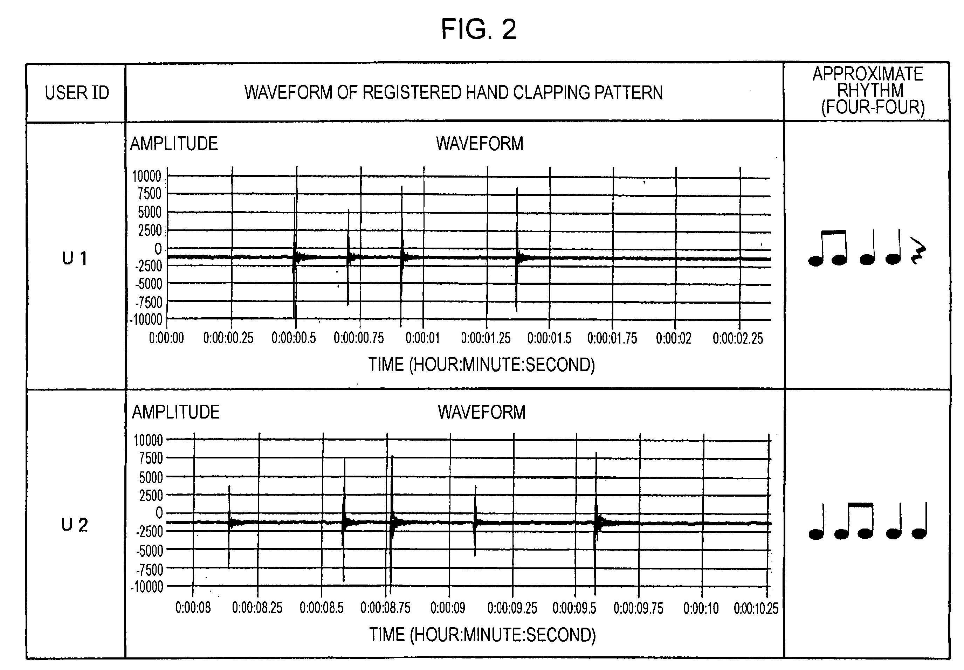

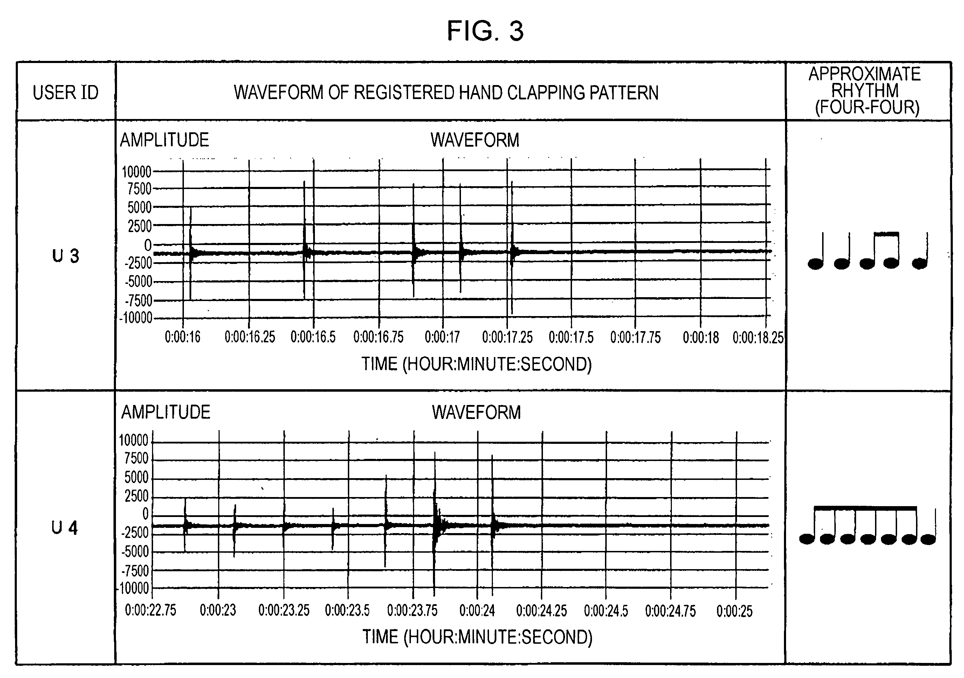

Figs. 2 and 3 illustrate four users having respectively user identifiers U1, U2, U3, and U4, and waveforms of the registered hand-clapping patterns.

To register the hand-clapping pattern, the user claps the user's hands for a plurality of times more than predetermined N times. The hand-clapping pattern is changed from user to user. The right-hand portion of Figs. 2 and 3 illustrate rhythm charts approximating the hand-clapping pattern.

The arithmetic processing block, composed of the CPU 11, the ROM 13, and the RAM 14, processes an input audio signal of a hand-clapping sound, and detects as a hand clap a point where the hand-clapping sound sharply rises in sound pressure level and reaches a predetermined threshold. The arithmetic processing block detects the hand-clapping pattern from the detection results.

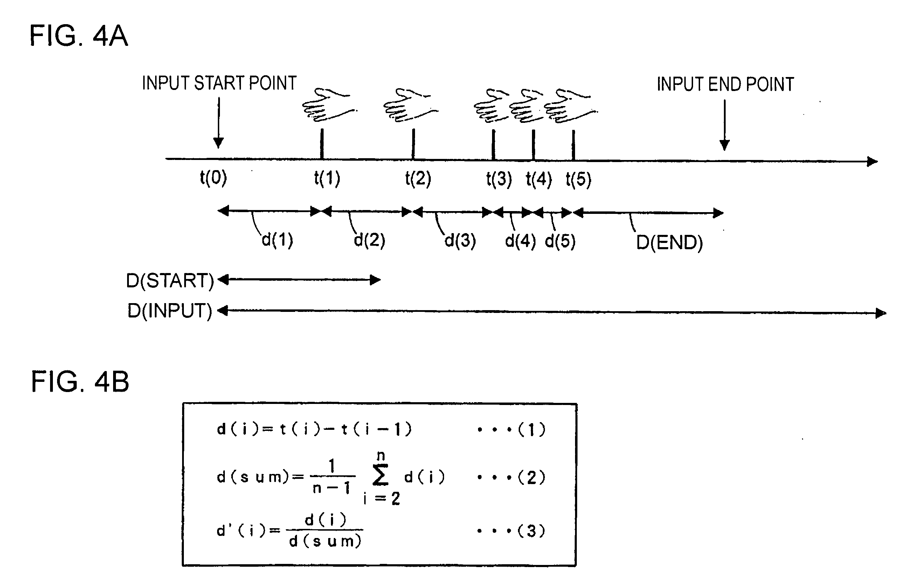

As shown in Fig. 4A, the hand-clapping sound is detected as a hand clap when the sound level thereof reaches the threshold value at time t(i) (i=1, 2, 3,..., n) within a predetermined period of time D(input) from an input start point t(0). A time interval d(i) between two hand claps adjacent to each other in time sequence represented by equation (1) shown in Fig. 4B is detected.

When a predetermined mute period of time D(end) has elapsed since the detection of last hand clap of the predetermined N or more hand claps, the detection of the hand claps ends. The hand claps of N times or more are detected because the hand-clapping pattern is difficult to be detected with a smaller number of hand claps.

If no sound is picked up within a predetermined period of time D(start) from the input start point t(0) or within a predetermined period of time D(input) from the input start point t(0), an input error is triggered. The user is requested to hand his claps again, or a predetermined state resumes for example, a menu screen is displayed. If hand claps last to sound even after the predetermined period of time D(input) from the input start point t(0), an input error is triggered.

If no input error is triggered, an overall length of time for picking up the hand claps d(sum), namely, a period of time from time t(1) to time(n) is calculated using equation (2) of Fig. 4B. As represented by equation (3) of Fig. 4B, the time interval d(i) is divided by the overall length of time d(sum) to result in normalized time interval d'(i). Herein, i of the normalized time interval d'(i) ranges from 2 to n.

The number of hand claps n, the normalized time interval d'(i), and the overall length of time d(sum) are stored onto the non-volatile memory 45 as a hand-clapping pattern of the user with the user identification ID of the user associated therewith.

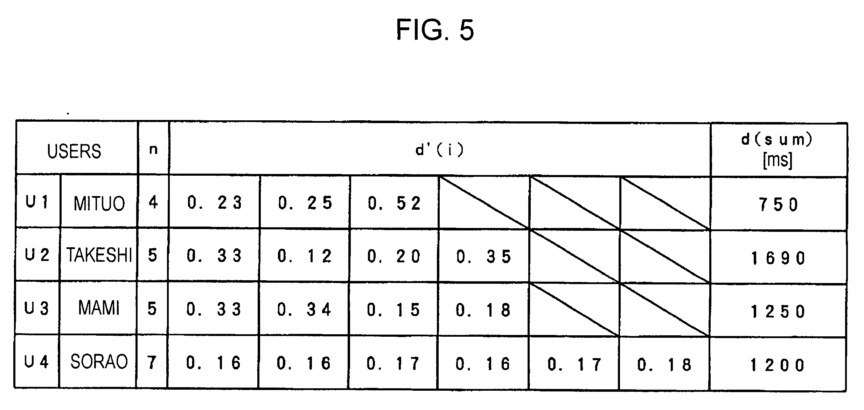

Fig. 5 lists the registered hand-clapping pattern of each user, namely, the number of hand claps n, the normalized time interval d'(i), and the overall length of time d(sum), in response to the waveforms of the hand claps of the users shown in Figs. 2 and 3.

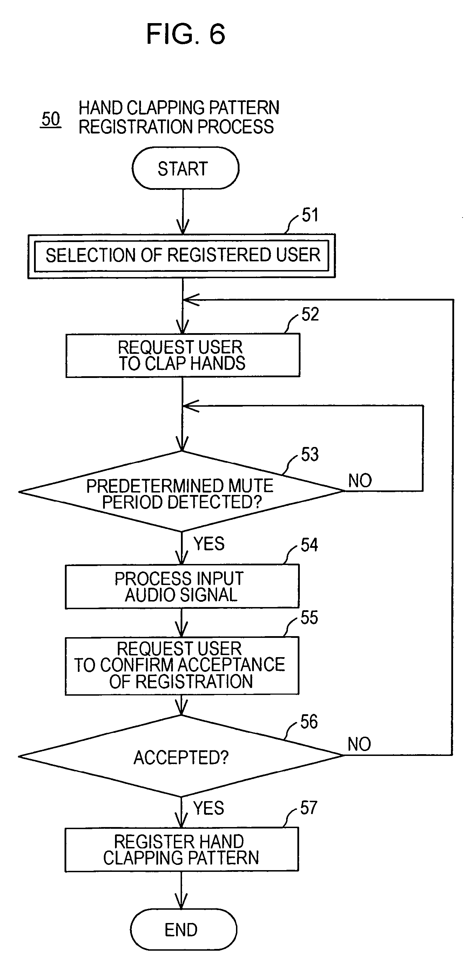

Fig. 6 illustrates a hand-clapping pattern registration process 50 performed by the CPU 11 in the content recording and playback apparatus 10. In the hand-clapping pattern registration process 50, the user selects himself as a user to be registered. More specifically, a user who desires to register his own hand-clapping pattern operates the operation unit 31 to enter his own name. The CPU 11 sets a user ID corresponding to the input user name.

In step 52, the CPU 11 displays a message, for example, reading "Clap hands" on the display 34. The CPU 11 also outputs an audio announcement "Clap hands" from the loudspeaker 38. In this way, the user is requested to clap his hands. In response, the user claps his hands.

In step 53, after the detection of the hand claps, the CPU 11 determines whether a mute period lasting over the predetermined period of time D(end) has elapsed. If no sound is picked up within the predetermined period of time D(start) from the input start point t(0), an input error is triggered. Fig. 6 illustrates an operation example when a predetermined number of hand claps are generated with no input error triggered.

If the predetermined mute period of time D(end) has elapsed since the detection of the hand claps, the CPU 11 proceeds from step 53 to step 54. The CPU 11 detects the hand-clapping pattern by processing the input audio signal as previously discussed. Processing proceeds to step 55 to determine whether the user accepts the registration.

In the registration acceptance procedure, the CPU 11 controls the display 34 to display a message, for example, reading "Are you satisfied with your current hand claps?", and the loudspeaker 38 to output an audio announcement stating "Are you satisfied with your current hand claps?". Alternatively, a detected hand clap sound is converted into a drum sound using a musical instrument digital interface (MIDI) and then output from the loudspeaker 38 for user determination. In response, the user replies acceptance or rejection using the operation unit 31.

In step 56, the CPU 11 determines whether the user has accepted the registration. If the CPU 11 determines the user has not accept the registration, processing returns to step 52 to request the user to claps his hands again.

If the CPU 11 determines that the user has accepted the registration, processing proceeds from step 56 to step 57. The CPU 11 stores, onto the non-volatile memory 45, the hand-clapping pattern detected in step 54 with the user name, and the set user ID shown in Fig. 5 associated therewith.

After the registration, the user causes the content recording and playback apparatus 10 to identify the user. For example, each user searches for a program recorded on one of the hard disk 15 and the recording medium 17 in the content recording and playback apparatus 10, and claps his hands to play back a searched program in the same manner as in the hand clapping registration process.

The arithmetic processing block including the CPU 11, the ROM 13, and the RAM 14 processes the input audio signal as the hand clap sound in the same way as in the registration. The arithmetic processing block detects as a hand clap a point where the hand-clapping sound sharply rises in sound pressure level and reaches a predetermined threshold. The arithmetic processing block detects the hand-clapping pattern from the detection results.

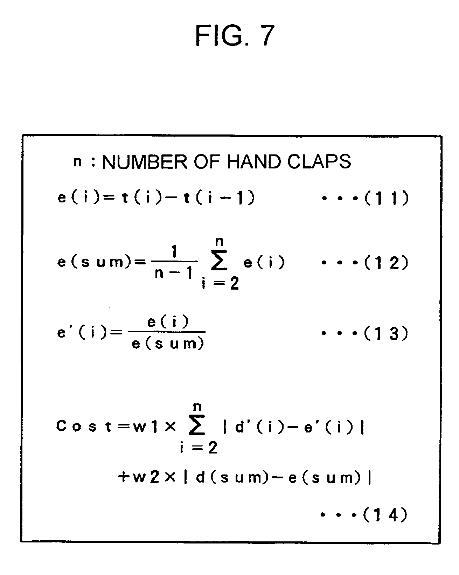

As previously described with reference to Fig. 4A, the hand-clapping sound is detected as a hand clap when the sound level reaches the threshold value at time t(i) within a predetermined period of time D(input) from the input start point t(0) as shown in Fig. 4A. A time interval e(i) between two hand claps adjacent to each other in time sequence represented by equation (11) shown in Fig. 7 is detected.

In the similar way as in the hand-clapping pattern registration, hand claps of the predetermined number N are detected. The detection of hand clapping ends when a mute period subsequent to the detection of last hand clap becomes longer than the predetermined time (D).

In the similar way as in the hand-clapping pattern registration, an input error is triggered if no sound is picked up within a predetermined period of time D(start) from the input start point t(0) or within a predetermined period of time D(input) from the input start point t(0). The user is requested to hand his claps again, or a predetermined state resumes for example, a menu screen is displayed. If hand claps last to sound even after the predetermined period of time D(input) from the input start point t(0), an input error is also triggered.

If no input error is triggered, an overall length of time for picking up the hand claps e(sum), namely, a period of time from time t(1) to time(n) is calculated using equation (12) of Fig. 7. As represented by equation (13) of Fig. 7, the time interval e(i) is divided by the overall length of time e(sum) to result in normalized time interval e'(i). Herein, i of the normalized time interval e'(i) ranges from 2 to n.

During user identification, the following steps are performed in the following order to identify each user. As shown in Fig. 5, the CPU 11 searches for, as an identified user candidate, a user having a predetermined number of hand claps matching the number of hand claps detected in the user identification from a table of the hand-clapping pattern registered in the non-volatile memory 45. As listed in the table of Fig. 5, if the number of hand claps detected in the user determination is "5", "Takeshi" having the user ID U2 and "Mami" having the user ID U3 become user candidates for identification.

For each user candidate found in the search, an error Cost represented in equation (14) of Fig. 7 is calculated. An error having a minimum error Cost is identified as a user and the user ID of that user is detected. Herein, w1 and w2 in equation (14) of Fig. 7 are predetermined weights.

The setting and process of the content recording and playback apparatus 10 are switched in response to the user identified by the detected user ID.

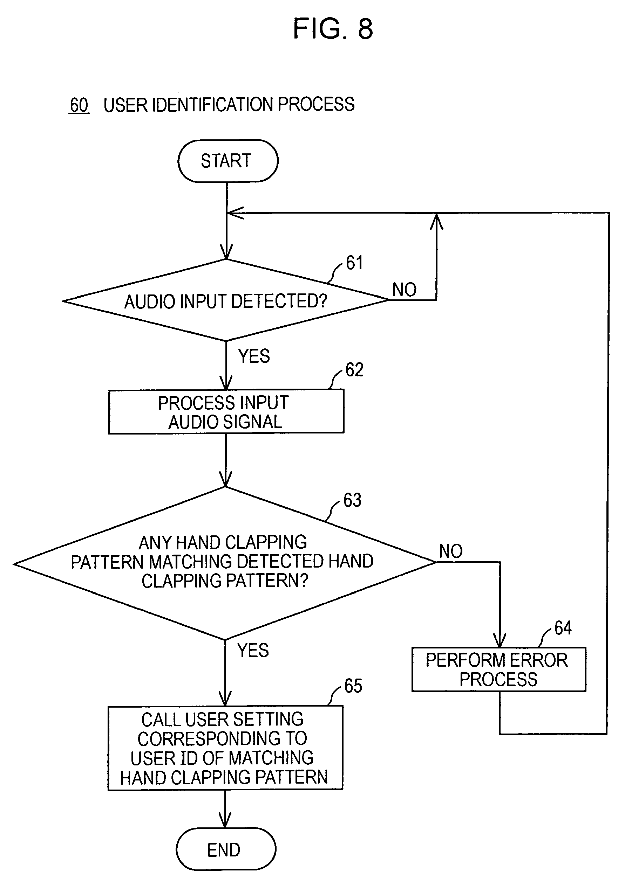

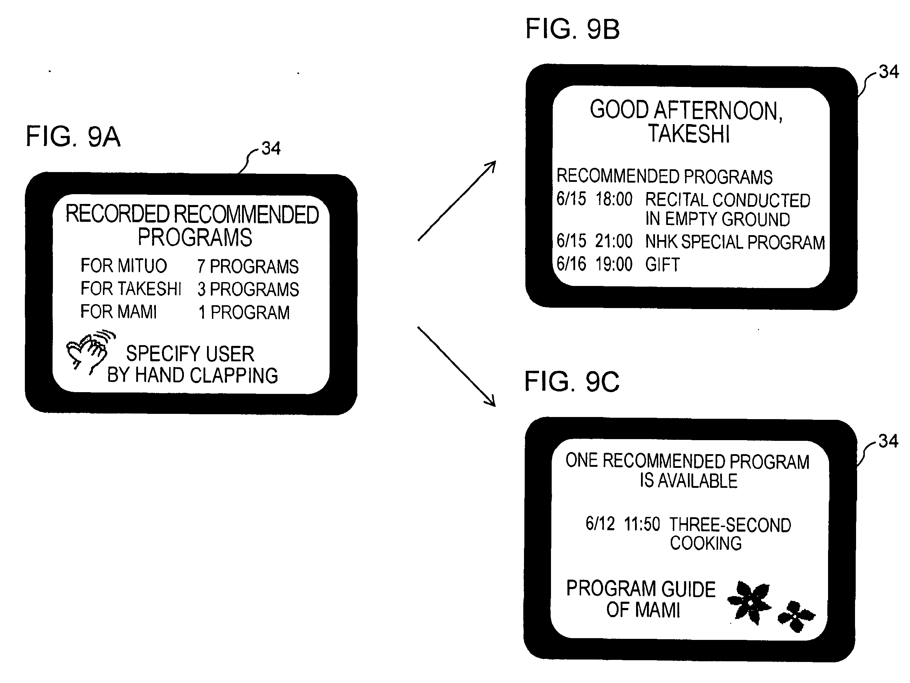

Fig. 8 illustrates the user identification process 60 performed by the CPU 11 in the content recording and playback apparatus 10. In the user identification screen 60, the CPU 11 starts the user identification process with a screen prompting the user to clap his hands as shown in Fig. 9A displayed on the display 34. In step 61, the CPU 11 determines whether an audio input is detected. If the CPU 11 determines that an audio input is detected, processing proceeds to step 62. The CPU 11 processes the input audio signal to detect the hand-clapping pattern. The CPU 11 determines in step 63 whether any hand-clapping pattern matching the detected hand-clapping pattern is registered in the non-volatile memory 45.

The "hand-clapping pattern matching the detected hand-clapping pattern" refers to, from among the hand-clapping patterns registered in the non-volatile memory 45, one hand-clapping pattern having the number of hand claps equal to the number of hand claps detected in step 62, and providing a minimum error Cost represented in equation (14) of Fig. 7.

The "hand-clapping pattern matching the detected hand-clapping pattern" in the above content may not be registered in the non-volatile memory 45. More specifically, if none of the hand-clapping patterns registered in the non-volatile memory 45 matches the hand-clapping pattern detected in step 62 in terms of the number of hand claps, processing proceeds from step 63 to step 64 to perform an error process. Processing then returns to step 61.

The error process in step 64 is to prompt the user to clap his hands again.

If the "hand-clapping pattern matching the detected hand-clapping pattern" in the above content is registered in the non-volatile memory 45, processing proceeds from step 63 to step 65. The CPU 11 calls user setting corresponding to the user ID having the matching hand-clapping pattern.

For example, with the screen of Fig. 9A displayed on the display 34, "Takeshi" claps his hands and the user is identified as "Takeshi". In such a case, a screen configured for "Takeshi" is displayed as shown in Fig. 9B. For example, with the screen of Fig. 9A displayed on the display 34, "Mami" claps her hands and the user is identified as "Mami". In such a case, a screen configured for "Mami" is displayed as shown in Fig. 9C.

### Second Embodiment

As shown in Fig. 1, the content recording and playback apparatus 10, including the entire user identification device 40, is provided with all user identification functions. Part or whole of the user identification device and the user identification function can be transferred to a remote controller that controls a content recording and playback apparatus.

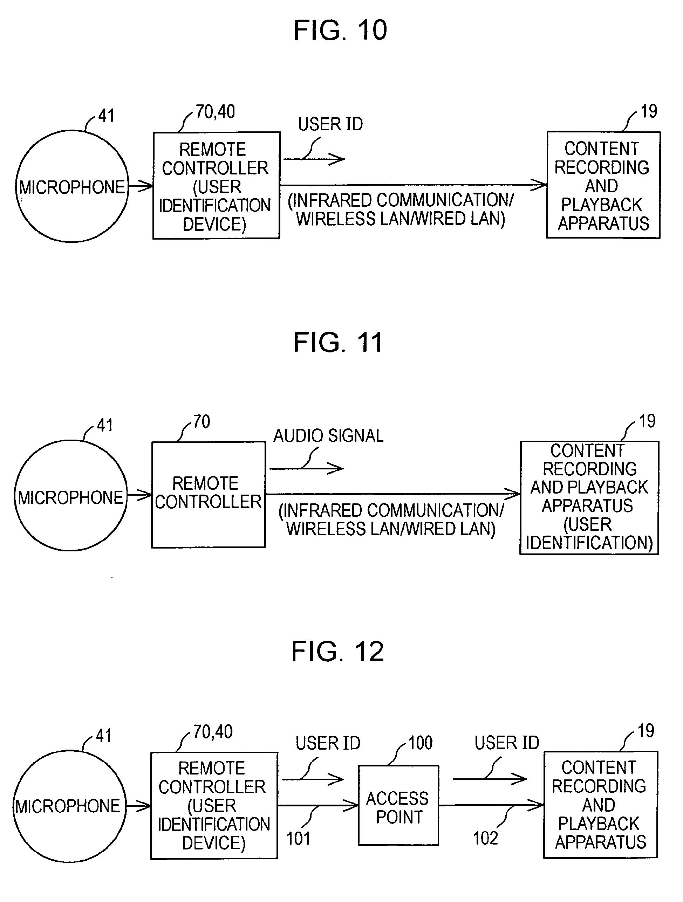

Fig. 10 illustrates such a content recording and playback system. The content recording and playback system includes a content recording and playback apparatus 19 and a remote controller 70. The remote controller 70, including the microphone 41, forms the user identification device 40. The remote controller 70 performs the hand-clapping pattern registration process and the user identification process, and transmits a user ID identifying a user to the content recording and playback apparatus 19.

One of an infrared communication link, a wireless local area network (LAN), and a wired LAN is used for communications between the remote controller 70 and the content recording and playback apparatus 19.

Fig. 11 illustrates another recording and playback system. The recording and playback system includes the content recording and playback apparatus 19 and the remote controller 70. The remote controller 70, including the microphone 41, transmits one of a digital audio signal and an analog audio signal responsive to a hand-clapping sound, generated by the user and picked up by the microphone 41, to the content recording and playback apparatus 19. The content recording and playback apparatus 19 performs the hand-clapping pattern registration process and the user identification process.

One of infrared communication link, a wireless local area network, and a wired LAN is used for communications between the remote controller 70 and the content recording and playback apparatus 19 in the same way as in the system of Fig. 10.

Fig. 12 illustrates another recording and playback system. As shown in Fig. 10, the remote controller 70, including the user identification device 40, performs the hand-clapping pattern registration process and the user identification process. A user ID identifying the user is transmitted to the content recording and playback apparatus 19 via a LAN 101, an access point 100, and a LAN 102. The LAN's 101 and 102 are wireless LAN's or wired LAN's.

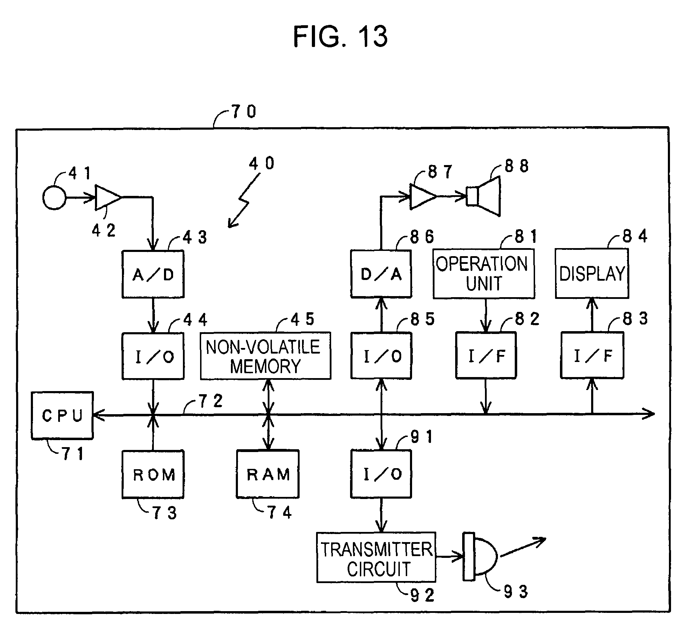

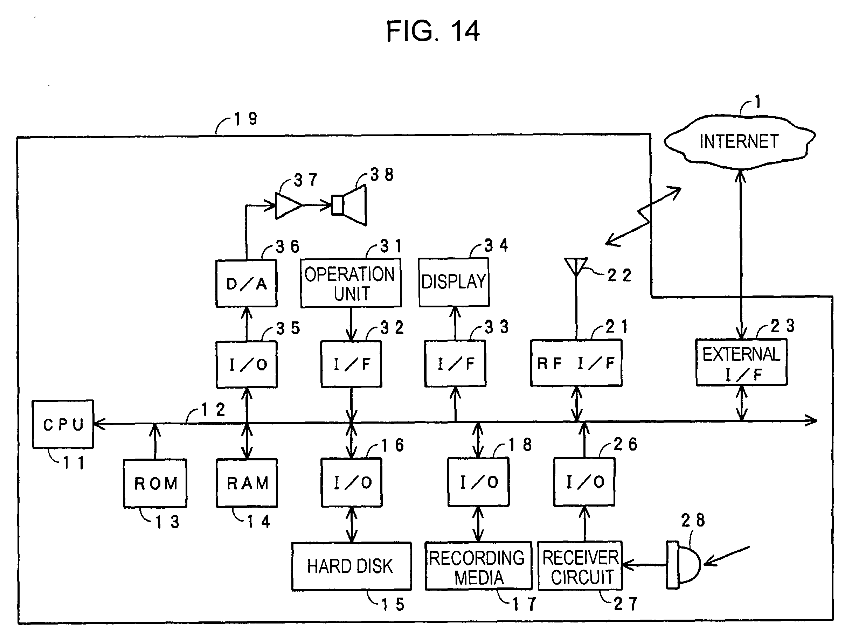

Figs. 13 and 14 respectively illustrate the remote controller 70 and the content recording and playback apparatus 19 in the system of Fig. 10 with the infrared communication link used.

The content recording and playback apparatus 19 of Fig. 13 includes a CPU 71. A bus 72 of the CPU 71 connects to a ROM 73 storing a variety of programs and data, and a RAM 74 onto which the programs and data are expanded.

The microphone 41 is connected to the bus 72 via the audio amplifier 42, the A/D converter 43, and the input and output port 44. The non-volatile memory 45 is also connected to the bus 72.

The user identification device 40 includes the microphone 41, the audio amplifier 42, the A/D converter 43, the input and output port 44, the non-volatile memory 45, the CPU 71, the ROM 73, and the RAM 74.

An operation unit 81 composed of a variety of keys is connected to the bus 72 via an interface 82. A display 84, such as a liquid-crystal display, is connected to the bus 72 via an interface 83. A loudspeaker 88 is connected to the bus 72 via an input and output port 85, a D/A converter 86 and an audio amplifier 87.

An operation screen and a setting screen are displayed on the display 84. An audio announcement is output from the loudspeaker 88.

An infrared light emission unit 93 is connected to the bus 72 via an input and output port 91 and a transmitter circuit 92.

The infrared light emission unit 93 transmits, as infrared light signals, a user ID identifying the user as described below, and a variety of remote control signals.

The content recording and playback apparatus 19 of Fig. 14 is different from the content recording and playback apparatus 10 of Fig. 1 in that the content recording and playback apparatus 19 is without the microphone 41. Instead, the content recording and playback apparatus 19 includes an infrared light receiving unit 28 connected to the bus 12 via an input and output port 26 and a receiver circuit 27. The remaining portion of the content recording and playback apparatus 19 is identical to the content recording and playback apparatus 10.

An infrared signal transmitted from the infrared light emission device 93 in the remote controller 70 of Fig. 13 is transmitted and then received by the infrared light receiving unit 28. The received infrared signal is then transferred to the bus 12 as a remote control signal.

The hand-clapping pattern registration process of the remote controller 70 of Fig. 13 is identical to the hand-clapping pattern of the content recording and playback apparatus 10 of Fig. 1. More specifically, each user claps beforehand his hands in a pattern unique to the user. The hand-clapping pattern is then stored in the non-volatile memory 45 in the remote controller 70 with the name of the user and the user ID associated therewith.

In the hand-clapping pattern registration process 50 of Fig. 6, the hand clapping request in step 52 and the registration acceptance confirmation in step 55 are performed when the display 84 of the remote controller 70 displays the message and when the loudspeaker 88 outputs one of the audio announcement and the drum sound.

The system can be modified so that the display 34 and the loudspeaker 38 in the content recording and playback apparatus 19 performs respectively the message displaying and the audio outputting to request hand clapping and registration confirmation in response to commands from the remote controller 70.

The user identification process subsequent the hand-clapping pattern registration is identical to the user identification of the content recording and playback apparatus 10 of Fig. 1 except that the user ID identifying the user is transmitted from the remote controller 70 to the content recording and playback apparatus 19.

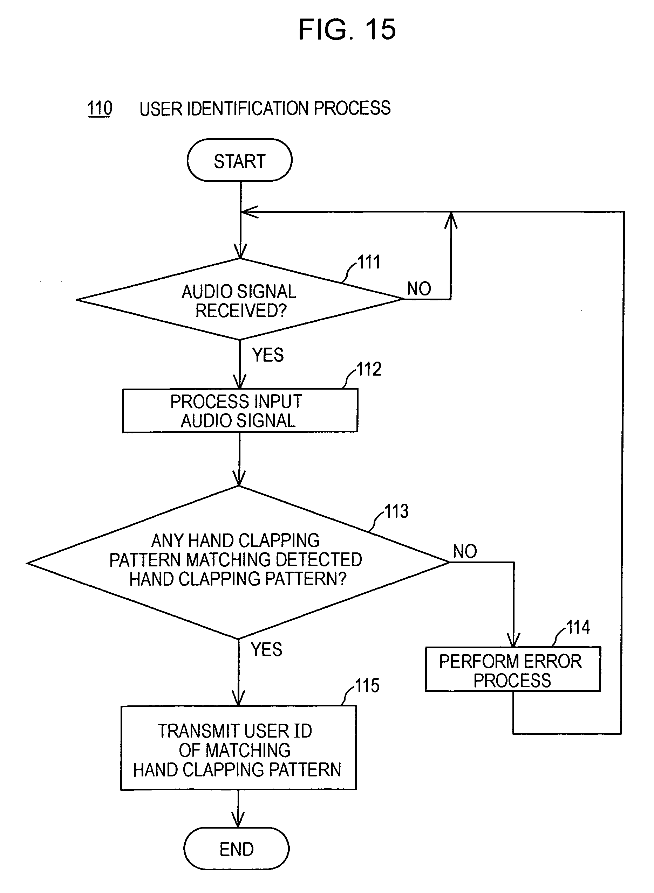

Fig. 15 illustrates the user identification process 110 performed by the CPU 71 of the remote controller 70. In the user identification process 110, the CPU 71 starts the user identification operation with a screen prompting the user to clap his hands displayed on the display 84. In step 111, the CPU 71 determines whether an audio input is detected. If the CPU 71 determines that an audio input is detected, processing proceeds to step 112. The CPU 71 determines whether any hand-clapping pattern matching the detected in step 113 hand-clapping pattern is registered in the non-volatile memory 45.

The meaning of the "hand-clapping pattern matching the detected hand-clapping pattern" has been previously discussed. The "hand-clapping pattern matching the detected hand-clapping pattern" may not be registered in the non-volatile memory 45. More specifically, if none of the hand-clapping patterns registered in the non-volatile memory 45 matches the hand-clapping pattern detected in step 112 in terms of the number of hand claps, processing proceeds from step 113 to step 114 to perform an error process. After performing the error process, processing then returns to step 111.

If the "hand-clapping pattern matching the detected hand-clapping pattern" is registered in the non-volatile memory 45, processing proceeds from step 113 to step 115. The CPU 71 calls user setting corresponding to the user ID having the matching hand-clapping pattern. The user ID is then transmitted to the content recording and playback apparatus 19 via the transmitter circuit 92 and the infrared light emission device 93.

The content recording and playback apparatus 19 receive the user ID with the infrared light receiving unit 28 and the receiver circuit 27 and calls the user setting corresponding to the user ID.

The system can be modified so that the request to prompt the user to clap his hands is performed by one of the display 34 and the loudspeaker 38 in the content recording and playback apparatus 19 in response to a command from the remote controller 70.

### Third Embodiment

In accordance with a third embodiment of the present invention, the hand-clapping pattern registration process and the user identification process are performed by an application program of a personal computer rather than by the hardware structure and the software structure of the remote controller.

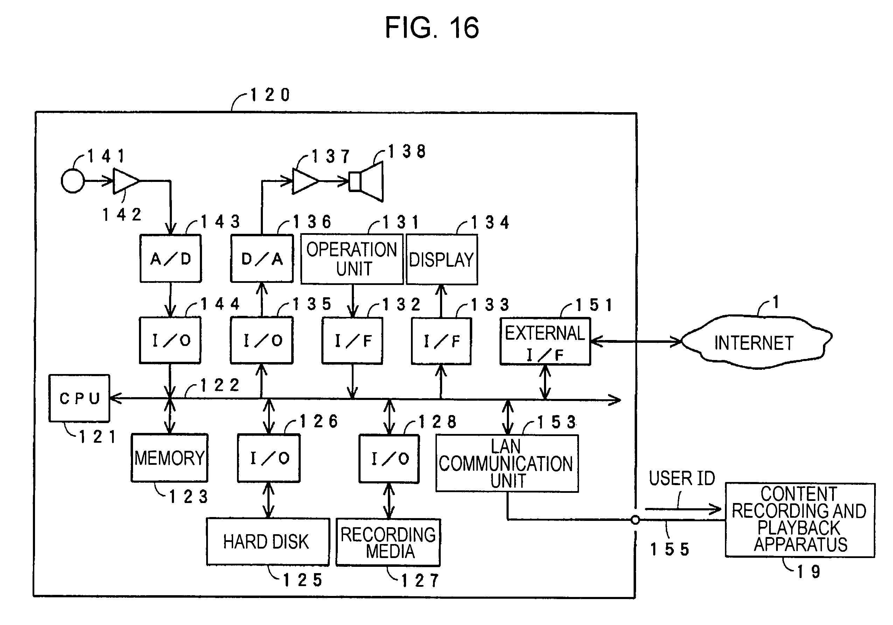

Fig. 16 illustrates such a system. In this system, a personal computer 120 is connected to the content recording and playback apparatus 19 via a LAN 155. The LAN 155 is one of a wireless LAN and a wired LAN.

The personal computer 120 is one of widely available personal computers except that the personal computer 120 is loaded with application programs for the hand-clapping pattern registration process and the user identification process.

The personal computer 120 includes a CPU 121. A bus 122 of the CPU 121 connects to a memory 123. A hard disk 125 is connected to the bus 122 via an input and output port 126. A recording medium 127 is connected to the bus 122 via an input and output port 128.

An operation unit 131, composed of a keyboard and a pointing device, is connected to the bus 122 via an interface 132. A display 134, such as a liquid-crystal display, is connected to the bus 122 via an interface 133. A loudspeaker 138 is connected to the bus 122 via an input and output port 135, a D/A converter 136, and an audio amplifier 137. A microphone 141 is connected to the bus 122 via an audio amplifier 142, an A/D converter 143, and an input and output port 144.

The microphone 141, the audio amplifier 142, the A/D converter 143, and the input and output port 144 are general-purpose audio input elements rather than elements that are particularly arranged to form a user identification device, and are used to perform the hand-clapping pattern registration process and the user identification process.

An external interface 151 for connection with the Internet 1 and a LAN communication unit 153 are connected to the bus 122. The LAN communication unit 153 is connected to the content recording and playback apparatus 19 via a LAN 155. A single interface can be shared by the external interface 151 and the LAN communication unit 153.

The content recording and playback apparatus 19 is connected to the LAN communication unit 153, which replaces the input and output port 26, the receiver circuit 27, and the infrared light receiving unit 28 shown in Fig. 14.

The application program of the personal computer 120 performing the hand-clapping pattern registration process and the user identification process is stored in the hard disk 125, and expanded onto the memory 123 during the hand-clapping pattern registration and the user identification.

The hand-clapping pattern registration process of the application program of the personal computer 120 is identical to each of the hand-clapping pattern registration process of the content recording and playback apparatus 10 of Fig. 1, and the hand-clapping pattern registration process of the remote controller 70 of Fig. 13. The hand-clapping pattern registration process of the personal computer 120 is thus shown as the hand-clapping pattern registration process 50 in Fig. 6.

The table of Fig. 5 that associates the hand-clapping pattern of each user with the user name and the user ID is generated on the memory 123 during the registration process, and is then stored on the hard disk 125.

The user identification process of the application program of the personal computer 120 is identical to user identification program of the remote controller 70 of Fig. 13, and is thus shown as the user identification process 110 in Fig. 15.

In the system, the user ID having the matching hand-clapping pattern is transmitted from the LAN communication unit 153 in the personal computer 120 to the content recording and playback apparatus 19. The content recording and playback apparatus 19 calls the user setting corresponding to the user ID.

### Other Embodiments

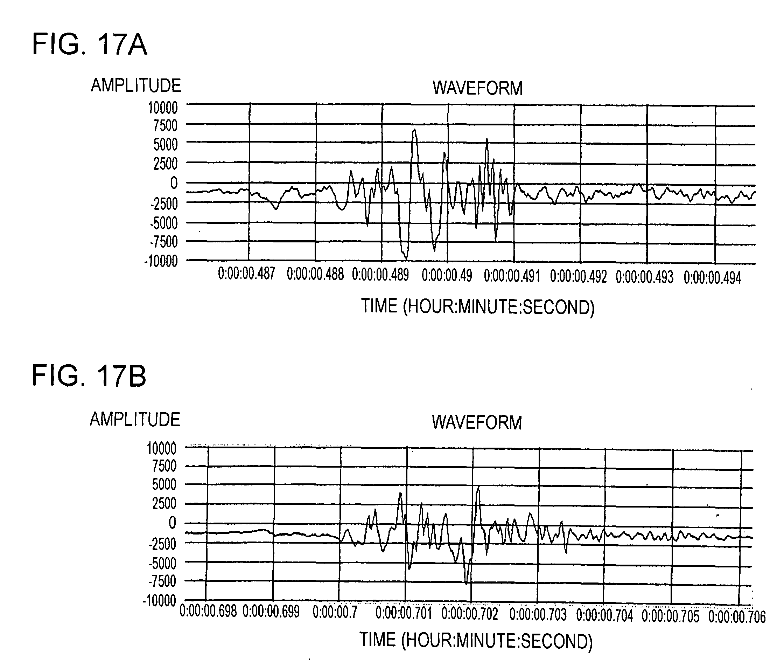

In the above-referenced embodiments, the user claps his hands successively several times. Alternatively, the user may claps his hands one time only. Figs. 17A and 17B illustrates a hand-clapping pattern of a single hand clapping.

In the single hand-clapping sound, one of Fast Fourier Transform (FFT) technique and wavelet transform technique is used to perform pattern matching between a registered hand-clapping pattern and a hand-clapping pattern detected during the user identification.

The single hand-clapping pattern varies in amplitude from pattern to pattern, and is lower in recognition accuracy than the multi hand-clapping pattern. However, the single hand-clapping pattern can identify the user within a short period of time.

Instate of hand clapping, the user can tap one of a bell arranged close to the apparatus and the edge of the apparatus.

One of the electronic apparatus identifying the user and the electronic apparatus to which the user ID of the user identified by the remote controller or the personal computer is transmitted may be a recording and playback apparatus. Alternatively, the electronic apparatus can be one of an air-conditioning apparatus, a robot, an illumination apparatus, a television receiver, and a personal computer.

For example, in the air-conditioning apparatus, the air-conditioning state is automatically shifted to a predetermined setting adapted to a particular user. In the case of the robot, the movement of the robot is automatically set to a predetermined setting adapted to a particular user. In the illumination apparatus, the illumination state is automatically switched to a predetermined setting adapted to a particular user. In the television receiver, the volume control level of a receiving channel is automatically shifted in response to one of the channel and state adapted to a particular user.

It should be understood by those skilled in the art that various modifications, combinations, sub-combinations and alterations may occur depending on design requirements and other factors insofar as they are within the scope of the appended claims or the equivalents thereof.

## Claims

1. A method of identifying a user, comprising steps of:
registering, in a memory, clapping patterns of clapping of a plurality of users with a user identification for identifying each user associated with a respective clapping pattern;
picking up the sound of claps to acquire an input audio signal responsive to the clapping sound;
processing the acquired input audio signal to detect a clapping pattern; and
comparing the detected clapping pattern with the registered clapping pattern to determine whether any of the clapping patterns registered in the memory matches the detected clapping pattern and in the event of the presence of one of the registered clapping patterns matching the detected hand pattern, identifying the user by the user identification, registered in the memory, associated with the matching clapping pattern.

2. The method according to claim 1, wherein the clapping sound comprises a hand-clapping sound.

3. The method according to claim 1 or 2, wherein the clapping sound comprises, within a predetermined period of time, a plurality of clapping sound components having a sound level higher than a predetermined sound level.

4. The method according to claim 3, wherein the clapping pattern is represented by the number of clapping sound components and a time interval between clapping sound components adjacent to each other in time sequence.

5. A device for identifying a user, comprising:
storage means for registering, in a memory, clapping patterns of clapping of a plurality of users with a user identification for identifying each user associated with a respective clapping pattern;
sound pickup means for picking up the sound of claps to acquire an input audio signal responsive to the clapping sound;
processing the acquired input audio signal to detect a clapping pattern; and
control means for comparing the detected clapping pattern with the registered clapping pattern to determine whether any of the clapping patterns registered in the memory matches the detected clapping pattern and in the event of the presence of one of the registered clapping patterns matching the detected hand pattern, identifying the user by the user identification, registered in the memory, associated with the matching clapping pattern.

6. The device according to claim 5, wherein the clapping sound comprises a hand-clapping sound.

7. The device according to claim 5 or 6, wherein the clapping sound comprises, within a predetermined period of time, a plurality of clapping sound components having a sound level higher than a predetermined sound level.

8. The device according to claim 7, wherein the clapping pattern is represented by the number of clapping sound components and a time interval between clapping sound components adjacent to each other in time sequence.

9. An electronic apparatus comprising the device of one of the claims 5 to 8, wherein one of setting and process of the apparatus is switched in response to the user identified by the control means.

10. An electronic system comprising:
a remote controller including the device of one of the claims 5 to 8; and
the electronic apparatus of claim 9 receiving the user identifier identifying the user and transmitted from the remote controller.

11. A computer program for causing a computer to identify a user, comprising program code for performing the method steps of one of the claims 1 to 4.
